# EUROPÄISCHE PATENTSCHRIFT

(11) **EP 0 437 649 B1**
(45) Veröffentlichungstag und Bekanntmachung des Hinweises auf die Patenterteilung: **06.04.1994**
(21) Anmeldenummer: 90100754.2
(22) Anmeldetag: 15.01.1990
(51) Int. Cl.: G01S 7/52, G10K 11/34

(54) **Verfahren zur Ultraschall-Bilddarstellung**
Method of ultrasound imaging
Procédé d'imagerie par ultrasons

(43) Veröffentlichungstag der Anmeldung: 24.07.1991
(73) Patentinhaber: SIEMENS AKTIENGESELLSCHAFT, 80333 München (DE)
(72) Erfinder: Hassler, Dietrich, Dipl.-Ing., D-8525 Uttenreuth (DE); Killig, Klaus, Dr.rer.nat., D-8552 Höchstadt (DE)

(56) Entgegenhaltungen:
- EP-A- 0 256 481
- EP-A- 0 320 303

## Beschreibung

Die Erfindung betrifft ein Verfahren zur Ultraschall-Bilddarstellung einer Schnittebene eines Objektes mit einer oberflächennahen inhomogenen Geschwindigkeitsverteilung, bei dem
- in einer nicht zur Bilddarstellung vorgesehenen Adaptionsphase die Schnittebene zeilenweise abgetastet wird,
- in der Adaptionsphase aus den von den Elementarwandlern in einer Apertur eines Wandlerarrays empfangenen Echosignalen entlang einer Abtastzeile Abweichwerte der Signalverzögerung der Elementarwandler gegenüber den Signalverzögerungen ermittelt werden, die bei homogener Schallgeschwindigkeitsverteilung die Elementarwandler auf die Abtastzeile fokussieren würden,
- aus den Abweichwerten jeweils mehrerer Abtastzeilen Korrekturwerte zur Empfangsfokussierung entlang einer einzelnen Abtastzeile in einer Bilddarstellungsphase gebildet werden
- und in der auf der Adaptionsphase folgenden Bilddarstellungsphase der Schnittebene beim fokussierten Empfang die Verzögerungszeiten, mit denen die Echosignale von den Elementarwandlern verzögert werden, in Abhängigkeit der Korrekturwerte verändert werden, so daß Bildirritationen aufgrund der inhomogenen Geschwindigkeitsverteilung kompensiert werden.

Ein Verfahren der eingangs genannten Art ist in der EP-A-0 256 481 beschrieben. Dieses Verfahren wird auch als "Prinzip der adaptiven Antenne" oder "Prinzip der adaptiven Aperturänderung" bezeichnet. Mit dem Verfahren werden in der Adaptionsphase die Störeffekte im Unterhautfettgewebe einmal in der interessierenden Schnittebene gemessen. In der darauffolgenden Bilddarstellungsphase werden diese Störeffekte dann bei jedem Scan im Sinne der adaptiven Antenne kompensiert. Die zunächst durchgeführte Messung der durch die inhomogene Geschwindigkeitsverteilung bedingten Störeffekte erfolgt ausschließlich aufgrund der aus dem Körper des Patienten reflektierten Echosignale. Dazu wird von den Echosignalen benachbarter Elementarwandler des Ultraschallarrays die Kreuzkorrelation gebildet. Aus der Verschiebung des Maximums der Kreuzkorrelationsfunktion gegen den Erwartungswert für den homogenen Fall werden Schallgeschwindigkeitsvariationen in der dem Ultraschallarray unmittelbar vorgelagerten Untersuchungsstrecke des Patienten erfaßt.

Zur Sicherung der Messung gegen Artefakte werden dort folgende Mittelungsmöglichkeiten vorgesehen:
a) Die HF-Echosignale eines möglichst großen Tiefenbereiches werden zur Korrelation herangezogen. Dabei wird der Tiefenbereich so gewählt, daß die Wege zu den Punkten an den Tiefenbereichsgrenzen im Bereich der wandlernahen Störschicht nicht zu unterschiedlich verlaufen. Die Tiefenbereiche können um so größer gewählt werden je dünner die Störschicht angenommen wird. Umgekehrt müssen die Tiefenbereiche kleiner gewählt werden, wenn die Störschichtdicken anwachsen.
b) Eine weitere Störunterdrückung kann dadurch erreicht werden, daß die Meßwerte von mehreren benachbarten Abtastzeilen gemittelt werden. Auch dabei ist auf die oben genannten Wegunterschiede zu achten.
c) Eine weitere Möglichkeit zu mehr voneinander unabhängigen Daten zu kommen besteht darin, über einen längeren Zeitraum zu messen und diese Daten zu mitteln. Dann werden Unterschiede der Echosignale erfaßt, die durch körperinterne Bewegungsvorgänge entstehen.
d) In Ergänzung zu Punkt c) kann auch ein bewußtes leichtes Verkippen des Arrays benutzt werden, um zu unabhängigen Daten zu kommen.

Diese Mittelungsverfahren erlauben eine Kompensation von Störeffekten, wenn sich die Inhomogenitäten im oberflächennahen Bereich bis zu einer Tiefe von ungefähr 10 mm erstrecken. Bei dickeren Störschichten vor dem Ultraschallarray sind die Laufzeitunterschiede zu den Wandlern zu unterschiedlich. Die Schallgeschwindigkeitschwankung in der Störschicht wirkt auf das Signal eines Elementarwandler je nach Lage des Wandlers innerhalb der aktiven Apertur unterschiedlich.

Der Erfindung liegt daher die Aufgabe zugrunde, Bildstörungen aufgrund von inhomogenen Schallgeschwindigkeitsverteilungen auch bei zunehmender Dicke der Störschicht zu kompensieren.

Die Aufgabe wird dadurch gelöst, daß in der Adaptionsphase die Abweichwerte und die Korrekturwerte für die Verzögerungszeiten in Abhängigkeit vom Einfallswinkel der Echosignale auf die Elementarwandler gebildet werden und daß in der darauffolgenden Bilddarstellungsphase die Verzögerungswerte in Abhängigkeit des Einfallswinkels der Echosignale und in Abhängikeit der Korrekturwerte für diesen Einfallswinkel geändert werden.

Durch die einfallswinkelabhängige Bestimmung der Abweichwerte und der Korrekturwerte für die Verzögerungszeiten ist bei der Mittelung sichergestellt, daß die Signallaufwege der zur Mittelung herangezogenen Echosignale nicht zu unterschiedlich sind.

Eine vorteilhafte Ausgestaltung der Erfindung zeichnet sich dadurch aus, daß die Abweichwerte und die Korrekturwerte für die Verzögerungszeiten für einen Einfallswinkelbereich gebildet werden, dessen Grenzen so festgelegt sind, daß die Phasenverschiebung der fokussierten Echosignale, die innerhalb des Einfallswinkelbereichs auf den Elementarwandler auftreffen, unterhalb einer Schwelle bleibt. Die Zusammenfassung mehrerer Einfallswinkel zu einem Einfallswinkelbereich beschränkt den Geräteaufwand und die Zeit zur Bestimmung der Korrekturwerte erheblich.

Eine weitere vorteilhafte Ausgestaltung zeichnet sich dadurch aus, daß der Gesamteinfallswinkelbereich zwischen den beiden maximalen Einfallswinkeln in für alle Wanderelemente gültige gleichgroße Einfallswinkelbereiche eingeteilt ist. Durch diesen Verfahrensschritt wird der Aufwand zur Bestimmung der Korrekturwerte weiter verringert.

In einer weiteren vorteilhaften Ausgestaltung basiert die Messung der Abweichwerte vorzugsweise auf der Kreuzkorrelation der Echosignale von benachbarten Elementarwandlern des Ultraschallarrays. Die Verschiebung des Maximums der Korrelationsfunktion gegen den Erwartungswert für den homogenen Fall erfaßt die Schallgeschwindigkeitsvariationen in den dem Ultraschallarray unmittelbar vorgelagerten Untersuchungsgebiet.

Bei einer weiteren vorteilhaften Ausgestaltung ist die Abtastzeile in für alle Elementarwandler und für alle Abtastzeilen gültige aneinandergrenzende Tiefenbereiche eingeteilt. Durch die für alle Abtastzeilen gültigen Tiefenbereiche ist der Aufwand zur Bestimmung der Korrekturwerte weiter verringert.

Weitere vorteilhafte Ausgestaltungen sind durch die Unteransprüche gekennzeichnet. Die Erfindung wird im folgenden anhand von 14 Figuren erläutert. Es zeigen:
- FIG 1: in einem schematischen Querschnitt die geometrischen Verhältnisse eines Untersuchungsgebiets mit einem angekoppelten Wandlerarray, das Untersuchungsgebiet weist eine wandlernahe inhomogene Schallgeschwindigkeitsverteilung auf;
- FIG 2: die Laufzeitverteilung einer im Untersuchungsbiet wandlernah liegenden, dünnen Störschicht;
- FIG 3: eine Einteilung des Gesamteinfallswinkelbereichs eines Elementarwandlers in gleichgroße Einfallswinkelbereiche, innerhalb deren die einfallenden Echosignale als durch die Störschicht gleichartig gestört angesehen werden können;
- FIG 4: die Aufteilung einer Abtastzeile in aneinandergrenzende Tiefenbereiche;
- FIG 5: die Abweichwertekurve eines Tiefenbereichs, die aus der Integration der aus der Kreuzkorrelationsfunktion gewonnenen Abweichwerte gebildet ist;
- FIG 6: die geometrischen Verhältnisse bei konstanter Fokussierungszahl;
- FIG 7: Abweichwertekurven aus zwei verschiedenen Tiefenbereichen;
- FIG 8: die Bildung der korrigierten Abweichwertekurve aus der Abweichwertekurve eines Abtaststrahls und eines Tiefenbereichs;
- FIG 9: wie FIG 8, jedoch für einen benachbarten Abtaststrahl;
- FIG 10: die Bildung der Hilfskorrekturwerte für einen Einfallswinkelbereich aus den korrigierten Abweichwertekurven aller Tiefenbereiche und Abtaststrahlen;
- FIG 11: die Bildung der Korrekturwerte für die Bilddarstellungsphase aus den Hilfskorrekturwertekurven;
- FIG 12: die vereinfachte Zuordnung der Abweichwerte zu den Tiefenbereichen;
- FIG 13: die vereinfachte Bestimmung der Einfallswinkelgrenze in der Abweichwertekurve eines Abtaststrahles aus den vorgebenen Tiefenbereiche und
- FIG 14: eine Variante zur vereinfachten Bestimmung der Einfallswinkelgrenze in der Abweichwertekurve eines Abtaststrahls aus dem vorgegebenen Tiefenbereich.

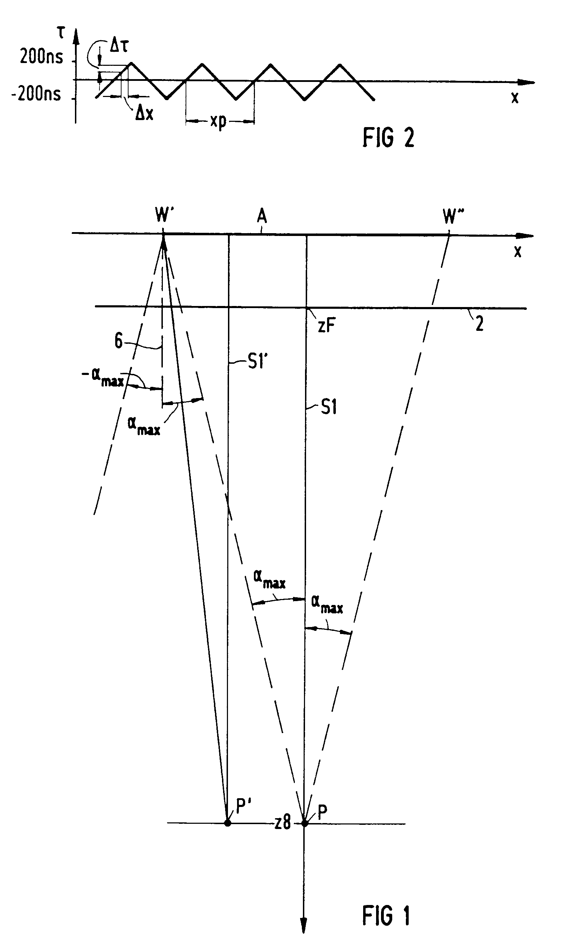

FIG 1 stellt ein Wandlerarray schematisch dar, dessen schallabstrahlende und -empfangende Oberfläche - d. h. die Elementarwandler des Arrays - durch die x-Achse dargestellt ist. Die Elementarwandler sind an der x-Achse an ein Untersuchungsgebiet angekoppelt. Das Untersuchungsgebiet erstreckt sich in der FIG 1 von der x-Achse in Richtung der z-Achse nach unten. Parallel zur x-Achse befindet sich im Untersuchungsgebiet im Abstand zF vor dem Array eine dünne Störschicht 2. Diese Störschicht verursacht eine längs der x-Achse dreiecksförmig verlaufende Laufzeitschwankung, wie in FIG 2 dargestellt. Die dünne Störschicht 2 ist ein vereinfachtes Modell einer sich von der x-Achse bis in die Tiefe zF erstreckende Störschicht 2 mit inhomogener Geschwindigkeitsverteilung. Es wird angenommen, daß sich die dünne Störschicht 2 in einer Tiefe von zF gleich 20 mm befindet.

Eine aktive Sende- und Empfangsapertur A im Wandlerarray wird begrenzt durch die Elementarwandler W' und W''. Die Breite der Apertur A beträgt z. B. 80 mm. Die Apertur A bildet einen zentralen Sende- und Empfangsstrahl oder Abtaststrahl S1 in Richtung der z-Achse.

Die Elementarwandler der aktiven Apertur A können Echosignale nur aus einem begrenzten, maximalen Einfallswinkelbereich von -αₘₐₓ bis αₘₐₓ empfangen. Der maximale Einfallswinkel αₘₐₓ bezieht sich auf die senkrechte Abstrahl- und Empfangsrichtung 6 des Elementarwandlers. Er bestimmt für eine vorgegebene Apertur A den dem Wandlerarray nächstgelegenen Punkt P, auf den fokussiert werden kann. In FIG 1 ist angenommen, daß der Punkt P, auf den die größte Apertur A noch fokussieren kann, in einer Tiefe z8 von 160 mm auf der z-Achse liegt.

Weiterhin wird aus Gründen der anschaulichen Darstellung angenommen, daß ein Abbildungssystem mit konstanter Fokussierungszahl (hier 160 mm / 80 mm = 2), vorliegt, d. h. der maximale Einfallswinkel αₘₐₓ des randständigen Wandlers W' oder W'' der Apertur A ist für alle Tiefen gleich, er beträgt im Beispiel αₘₐₓ = 14°.

Wird nun die aktive Apertur A so verschoben, daß sie den AbtastStrahl S1' erzeugt, dann durchlaufen die Echosignale von Punkt P' zum Wandler W' andere Bereiche der Störschicht 2 als im Fall des Sendestrahls S1 die Echosignale vom Punkt P. Es werden also winkelabhängig unterschiedliche Echolaufzeiten auf dem Weg zum Wandler W' durch die Störschicht 2 auftreten. Man kann nun den Winkelbereich Δα ausrechnen, innerhalb dessen die Phasenverschiebung unter einer Schwelle, z. B. ein zehntel der Periodendauer der Schallwelle bleibt. In diesem Bereich können die Rücklaufwege als gleichartig gestört angesehen werden, weil die Aufaddition nur so gering gegeneinander verschobener Signale einen vernachlässigbar kleinen Fehler aufweist.

FIG 2 zeigt den Verlauf der Schwankungen der Laufzeit τ in der Grenzschicht 2 in Richtung der x-Achse. Die Laufzeitschwankungen entsprechen den inversen Schallgeschwindigkeitsschwankungen in der Grenzschicht 2. Der Verlauf der Laufzeitschwankungen ist dreieckförmig mit einer Periode xp. Im Beispiel beträgt die maximale Amplitude der Langzeitschwankung 200 ns bei einer Periode xp = 20 mm.

Bei einer Schallfrequenz von 2,5 MHz und einer Störschicht entsprechend FIG 2 im Abstand zF = 20 mm von der Arrayoberfläche bzw. x-Achse ergeben sich folgende Werte für die tolerable Phasenverschiebung und den Winkelbereich .

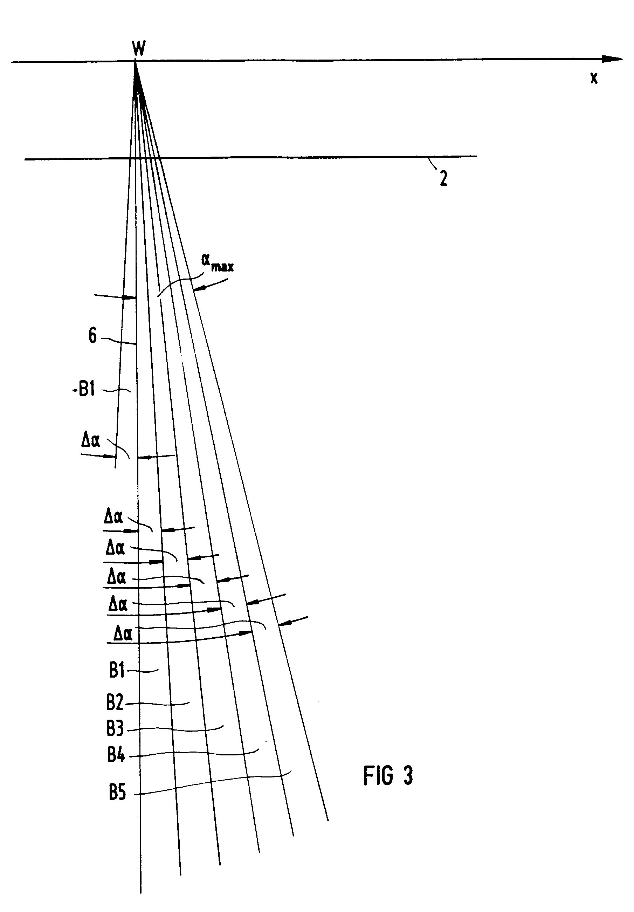

Die Periodendauer T der Schallwelle bei einer Frequenz von 2,5 MHz beträgt 400 ns. Damit ergibt sich eine tolerable Phasenverschiebung von Δτ = 1/10 T = 40 ns. Das bedeutet, daß die Echosignale, die in der Störschicht einen Bereich von Δx = 1 mm durchlaufen, als gleichartig gestört angesehen werden. In FIG 2 sind die tolerable Phasenverschiebung Δτ und der Bereich Δx der Störschicht aus Gründen der besseren Darstellbarkeit übertrieben groß eingezeichnet. Der Winkelbereich innerhalb dessen die Phasenverschiebung unterhalb der Grenze von 1/10 T bleibt, beträgt somit Δα = 2,86°. Beträgt der maximale Einfallswinkel bezüglich der Senkrechten 6 αₘₐₓ = 14°, so kann er in 5 Winkelbereiche eingeteilt werden. Diese 5 Winkelbereiche eines Elementarwandlers W sind in FIG 3 angegeben. Die Breite der Bereiche ist jeweils Δα, der am nächsten zur Senkrechten 6 liegende Bereich trägt das Bezugszeichen B1 bzw. -B1 die darauffolgenden Bereiche sind fortlaufend durchnummeriert bis Bereich B5, wobei die Bereiche symmetrisch zur Senkrechten 6 liegen. Der gesamte Einfallswinkelbereich zwischen -αₘₐₓ und αₘₐₓ ist somit in 10 Winkelbereiche -B5 bis +B5 mit der Breite Δα eingeteilt.

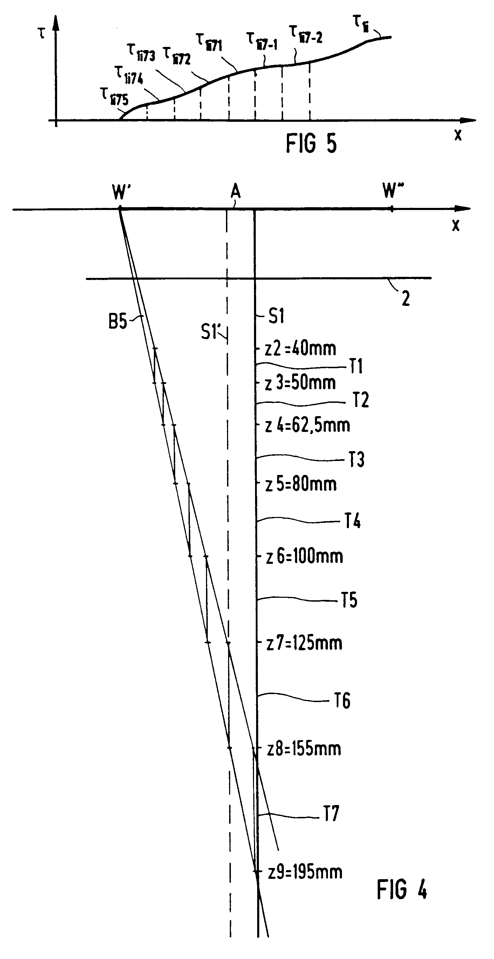

In FIG 4 ist für einen randständigen Wandler W' der Apertur A der am meisten von der Senkrechten 6 abweichende Winkelbereich B5 herausgezeichnet. Man sieht, daß bei Sendung längs des idealisiert gezeichneten Sendestrahls S1 nur Echosignale aus dem Tiefenbereich z8 bis z9 bezüglich des Wandler W' als gleichartig gestört angesehen werden dürfen. Nur solchermaßen ausgewählte Echosignale dürfen zur Ermittlung der Laufzeitstörungen für den Winkelbereich B5 herangezogen werden. Mit dieser Beschneidung sinkt allerdings die statistische Basis für die Messung und damit die Genauigkeit. Um trotzdem die Genauigkeit zu erhöhen, wird wie im folgenden beschrieben vorgegangen.

Wenn während eines Abtastvorgangs (hier Parallelscan) der Sendestrahl längs der Geraden S1' zu liegen kommt, werden Signale des Wandler W' nur aus dem Tiefenbereich z7 bis z8 mit den entsprechend tiefenselektierten Signalen der Nachbarwandler von W' korreliert. Das Vorgehen kann entsprechend fortgesetzt werden, so daß der große Tiefenbereich von z2 bis z9 genutzt wird, um die Irritation im Winkelbereich B5 für den Elementarwandler W' zu bestimmen.

Jedoch ist die Korrelation für den Winkelbereich B5 bezüglich der Nachbarwandler von W' nur in einer beschränkten Umgebung von W' zulässig. Die Größe dieses Bereichs wird später diskutiert.

Die Tiefenbereiche auf dem Sende- und Empfangsstrahl S1 oder der Abtastzeile werden wie folgt festgelegt. Der maximale Winkelbereich B5 des randständigen Wandlers W' bzw. W'' der größten Apertur A legt den am weitesten von der Arrayoberfläche entfernten Tiefenbereich T7 fest. Die Schnittpunkte des Empfangswinkelbereichs B5 mit der Abtastzeile S1 ergibt die Punkte z9 und z8 auf der Abtastzeile S1. Nun wird der Ursprung des Winkelbereichs B5 innerhalb der Apertur soweit verschoben, daß der Schenkel des Winkelbereichs B5, der vorher die Tiefe z9 bestimmt hat nun in der Tiefe z8 die Abtastzeile 4 schneidet. Der Schnittpunkt des anderen Schenkels des Winkelbereichs B5 legt die wandlernahe Grenze des Tiefenbereichs T6 fest. Der Tiefenbereich T6 schließt sich in Richtung des Wandlerarrays unmittelbar an den Tiefenbereich T7 an. Der sich an den Tiefenbereich T6 anschließende Tiefenbereich T5 wird analog bestimmt, usw.

In der FIG 5 ist entsprechend dem Verfahren, wie es in der europäischen Patentameldung 0 256 481 beschrieben ist, über die Apertur A die aufintegrierte Laufzeitkurve τ gezeigt, wie sie sich aus der Korrelation der Echosignale aus dem Tiefenbereich T7 ergibt. Daran sind zusätzlich die von den Winkelbereichen B5 bis -B5 abhängigen Kurvenstücke markiert. Der Index der einzelnen Kurvenstücke der Abweichwertekurve setzt sich wie folgt zusammen:
1. Index: Nummer des Sendestrahls, hier Sendestrahl S1
2. Index: Nummer des Wandlers, wobei die Wandler nicht einzeln indentifziert sind, da die Kurve der Abweichwerte in FIG 5 über den Wandlern aufgetragen ist,
3. Index: Nummer des Tiefenbereichs, hier Tiefenbereich T7
4. Index: Nummer des Winkelbereichs, hier B5, B4, B3, B2, B1, -B1, -B2,...

In FIG 5 stellt also das linke Kurvenstück τₗᵢ₇₅ der Abweichwertekurve die aufintegrierten Abweichwerte des Wandlers i für den Winkelbereich B5 dar, die mit Hilfe des Abtaststrahls S1 aus dem Tiefenbereich T7 gewonnen wurde.

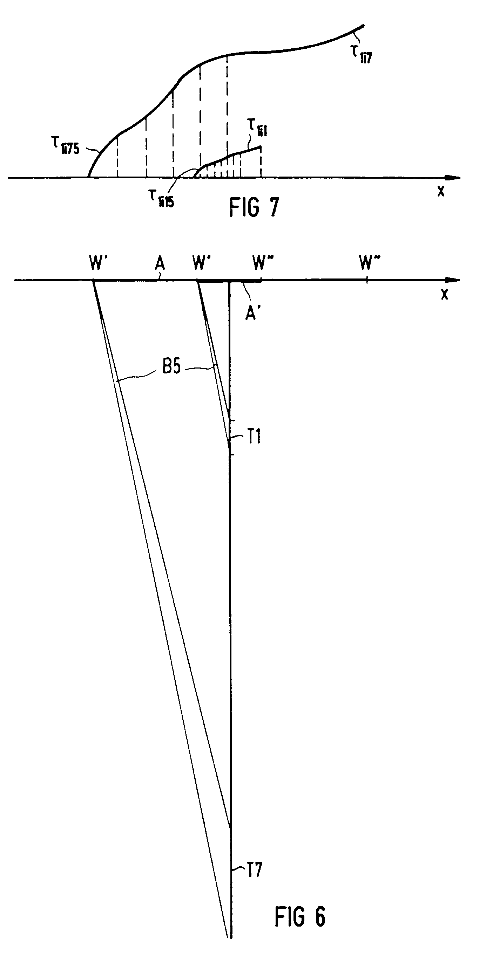

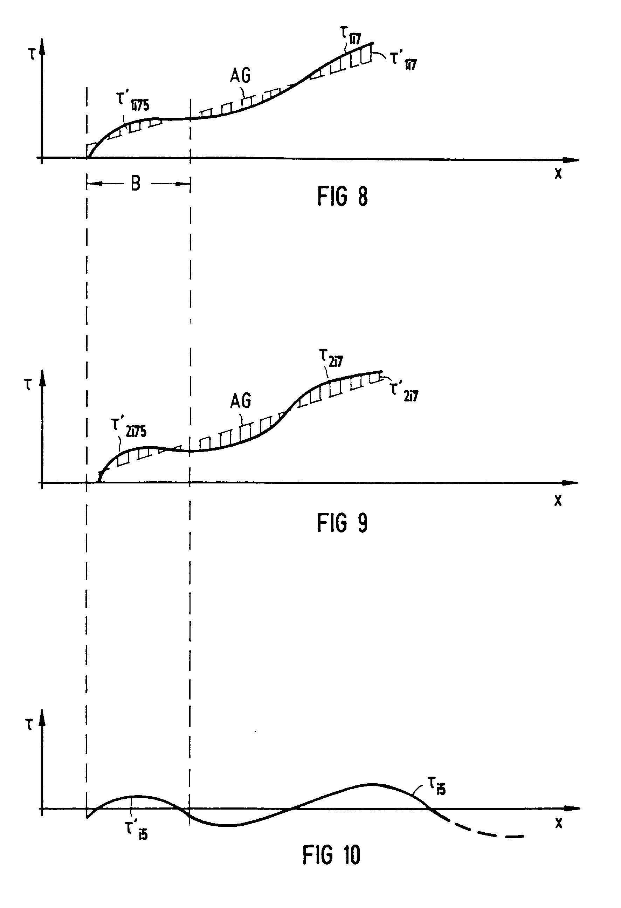

Entsprechende Kurven erhält man aus den Korrelationen von Signalen aus anderen Tiefenbereichen, wie in FIG 6 und 7 beispielhaft für die Tiefenbereiche T1 und T7 angegegeben ist. Für den Tiefenbereich T1 erstreckt sich die aufintegrierte Kurve bei einem System mit konstanter Fokussierungszahl auf eine kleinere Apertur A'. Die von den unterschiedlichen Empfangswinkelbereiche festgelegten Teilbereiche der Abweichwertekurve für den Tiefenbereich T1 liegen enger beieinander als bei der Kurve für den Tiefenbereich T7. Entsprechende Kurven enthält man für alle Abtastzeilen der Schnittebene.

Nach dem Verfahren des Minimums der Summe alle Abweichquadrate (Methode der kleinsten Fehlerquadrate) wird in jede, einem Tiefenbereich zugeordneten Abweichwertekurve eine Ausgleichsgerade AG gelegt. Die Differenzwerte zwischen der Abweichwertekurve und der Ausgleichsgeraden AG werden als korrigierte Abweichwertekurve der weiteren Signalverarbeitung zugrundegelegt. Auf diese Weise entfernt man aus den Daten die durch "Mitziehen" der adaptiven Anntene entstanden Fehler. Dieses "Mitziehen" kann auf folgende Weise entstehen: Vom Sendestrahl wird ein seitlich des Sendestrahls stehender, sehr starker Reflektor geringfügig mit beschallt. Das Echosignal von diesem starken Reflektor kann die vom Zentralstrahl erzeugten Echosignale so stark dominieren, daß sich die adaptive Anntene über einen großen Abtastbereich auf diesen Reflektor fokussiert und im Empfangsfall immer nur diesen Reflektor scheinbar anschaut, anstatt eine Abtastbewegung durchzuführen. In dem man über die Ausgleichsgerade AG die mögliche "Schiefe" in der Meßkurve beseitigt, wird dieser Störeffekt unterbunden.

Die Bestimmung der korrigierten Abweichwertekurve wird in den Figuren 8 bis 10 erläutert. FIG 8 zeigt die Abweichwertekurve bezogen auf die Abtastzeile S1 und den Tiefenbereich T7. Der Bereich für den Einfallswinkel B5 ist gestrichelt abgegrenzt. Die Differenzwerte der Abweichwertekurve gegen die Ausgleichsgerade AG sind mit τ' bezeichnet. FIG 9 zeigt eine FIG 8 entsprechende Kurve für die Abtastzeile S2 und sonst gleichen Parametern. Die Abweichwertekurve der Abtastzeile S2 in FIG 9 ist gegenüber der Kurve in FIG 8 um ein Wandlerelement verschoben. Die weiteren Kurven für andere Tiefenbereiche sind nicht mehr gezeigt, weil sie bis auf eine Stauchung oder Dehnung in x-Richtung im Prinzip gleich aussehen.

Da die Kurven für unterschiedliche Tiefenbereiche und unterschiedliche Abtastzeilen verschiedene Integrationskonstanten enthalten, muß vor der beabsichtigten Mittelung aller Werte entweder der Prozeß des "Aligning" eingeschaltet werden, wie bereits in der EP-A-0 256 481 beschrieben ist, oder es müssen die für einen Winkelbereich, z. B. Winkelbereich B5 geltenden Kurventeile der korrigierten Abweichwertekurven vor der Mittelung von den Gleichanteilen befreit werden. Dazu wird der Mittelwert des Kurvenstücks gebildet und anschließend von diesem Kurvenstück abgezogen.

Für jeden Wandler (Index i in der korrigierten Abweichwertekurve) werden nun alle von den Gleichanteilen befreiten, korrigierten Abweichwerte für gleiche Winkelbereiche aber unterschiedliche Abtastzeilen und Tiefenbereiche miteinander gemittelt oder aufaddiert. Dies ergibt die in FIG 10 gezeigte Hilfskorrekturwertekurven τᵢ₅' für den Einfallswinkelbereich B5. Die Hilfskorrekturwertekurve τᵢ₅ enthält für alle Elementarwandler des Arrays Korrekturwerte für die Echosignale, die aus dem Winkelbereich B5 auf die entsprechenden Elementarwandler auftreffen.

Entsprechende Kurven werden für die anderen Winkelbereiche gebildet, so daß als Ergebnis 10 Hilfskorrekturwertekurven für die 10 Winkelbereiche -B5 bis +B5 vorliegen. Diese enthalten die für die ganze Adaption notwendige Information, auch für große Aperturen.

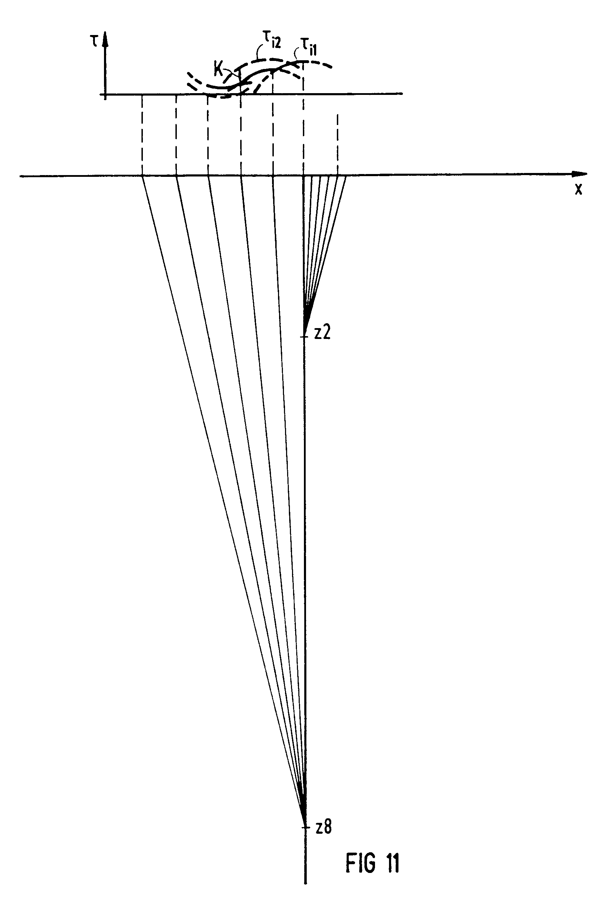

Mit FIG 11 soll erläutert werden, wie aus den oben gewonnen Hilfskorrekturwerte die Information für eine bestimmte aktive Apertur zusammengestellt wird. Dies bedarf einer eigenen Überlegung, weil alle Ergebnisse, die aus den Echosignalen unterschiedlicher Tiefenbereiche gewonnen wurden, wie oben bereits angegeben, verschiedene Integrationskonstanten enthalten. Da die Integrationskonstante für die Korrektur der Fokussierung nicht benötigt wird, genügt es, dafür zu sorgen, daß innerhalb einer Apertur nur eine gemeinsame Konstante auftritt. Zwischen unterschiedlichen Aperturen darf eine unterschiedliche Konstante auftreten. Dies bewirkt nur eine Pulsverschiebung im Summensignal, die gemessen an der zur Bilddarstellung benötigten Pulseinhüllenden vernachlässigbar klein ist.

Die Bedingung für eine gemeinsame Integrationskonstante pro Apertur wird aus der Forderung abgeleitet, daß die Kurve der Korrekturwerte über der vollständigen Apertur keine Unstetigkeiten aufweisen darf. Dementsprechend werden nach FIG 11 aus den 10 Hilfskorrekturwertekurven die für eine bestimmte Apertur zutreffenden Teile für die Winkelbereiche herausgenommen und so aneinandergesetzt, daß an den Stoßstellen keine Sprünge auftreten. Da für die Aperturmitte die sichersten Werte vorliegen, wird mit den Winkelbereichen B1 und -B1 ohne Verschiebung bzw. ohne Addition einer zusätzlichen Konstanten begonnen und die Nachbarbereiche B2 und -B2 je soviel verschoben, daß die Randwerte, oder mehrere überlappende randnahe Kurvenwerte im Sinne des "Aligning" übereinstimmen. So fährt man bis zum äußersten Winkelbereich fort und erhält eine Gesamtkurve der Korrekturwerte für die vollständige Apertur A.

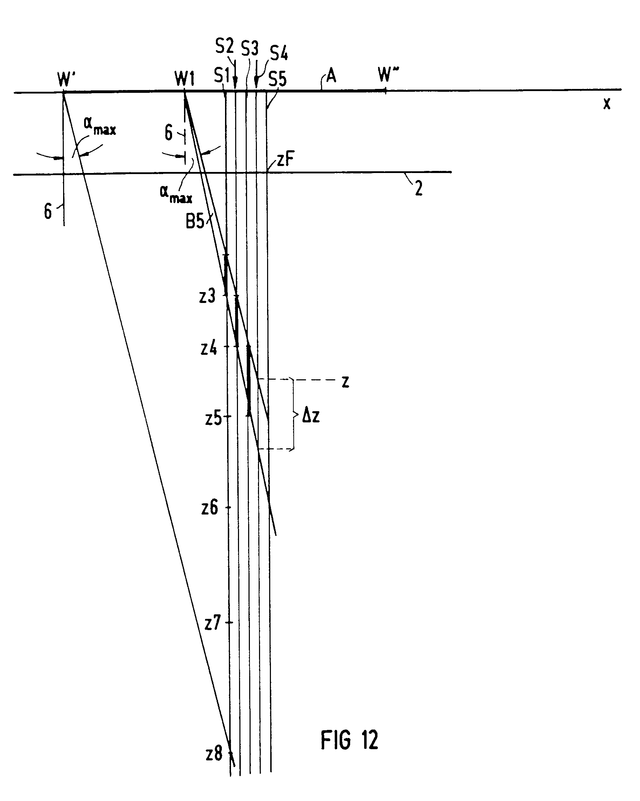

Wie FIG 4 zeigt, ist der Abstand zwischen den Abtastzeilen S1 und S1', die genau die gezeichneten Tiefenbereiche T7 bzw. T6 aus den vorgegebenen Winkelbereichen ausschneiden, so groß, daß viele Abtastzeilen dazwischen Platz finden. Bei Anwendung des bisher geschilderten Prinzips müssen für die zwischenliegenden Abtastzeilen neue Tiefenbereiche definiert und neue Korrelationswerte ermittelt werden. Um den damit verbundenen Aufwand zu vermeiden, wird eine Vereinfachung vorgeschlagen, die anhand von FIG 12 erklärt wird.

W' und W'' sind die randständigen Elementarwandler der Apertur A, die längs einer Abtastzeile S1 sendet. Die auf diesen kritischsten Fall ausgelegten Tiefenbereiche T1 bis T7 sind analog zu FIG 4 mit den Punkten z2 bis z8 festgelegt. Ein Elementarwandler W1 erfaßt im Bereich B5 auf der Abtastzeile S1 den Tiefenbereich von z2 bis z3. Bei der Abtastzeile S4 aber müßte er den mit Δz bezeichneten Bereich erfaßen, der nicht mit dem Bereich z4 bis z5 zusammenfällt. Bei dem vereinfachten Verfahren wird nun auf neue Korrelationen mit den Signalen aus diesem Tiefenbereich verzichtet und statt dessen das Korrelationsergebnis der Signale aus dem Tiefenbereich von z4 bis z5 verwendet. Korrelationsergebnisse aus Tiefenbereichen, die zumindestens zur Hälfte den eigentlich zu betrachtenden Tiefenbereich überdecken, werden zur Mittelung herangezogen.

Da die Korrelationen, weil sie jeweils nur die Empfangswinkelbereiche erfassen, aus sehr kurzen Echosignalausschnitten gebildet werden, sind Meßfehler für die Abweichwerte denkbar. Diese können trotz Mittelung stärker zu Buche schlagen, als bei einer Korrelation von langen Signalausschnitten, weil bei der Korrelation von langen Signalausschnitten kleine Signalwerte nicht viel zur Korrelation beitragen. Da bei der Auswertung der Korrelation die Amplituden der Kreuzkorrelationsfunktionen nicht mit berücksichtigt werden, kann eine Korrelation von kleinen Signalamplituden von einem kleinen Echosignalausschnitt ein zu hohes Gewicht erhalten. Daher ist es angebracht, bei der Mittelung der korrigierten Abweichwerte eine Gewichtung nach der Höhe des Maximums der Korrelationsfunktion vorzunehmen.

Für die nahezu senkrecht auf das Array treffenden Echosignale kann in einer Alternative nach der bisherigen Methode ein dem gemittelten Wert entsprechender Wert direkt gewonnen werden. Dazu muß ein Winkelbereich eingeführt werden der um +/- Δα/2 symmetrisch zur Abtastzeile liegt. Wenn nun ein Phasenlaufzeitfehler von +/- 1/10 Periodendauer statt nur 1/10 der Periodendauer zugelassen wird, können die Bereiche B1 und -B1, B2 und -B2, B3 und -B3, B4 und -B4 und B5 und -B5 zusammengezogen werden, so daß nur 5 Winkelbereiche verbleiben. Die Korrelationen aus der langen Echofolge aus der Tiefe von z2 bis z9 können das Mittlungsergebnis für den Bereich B1 und -B1 ersetzen.

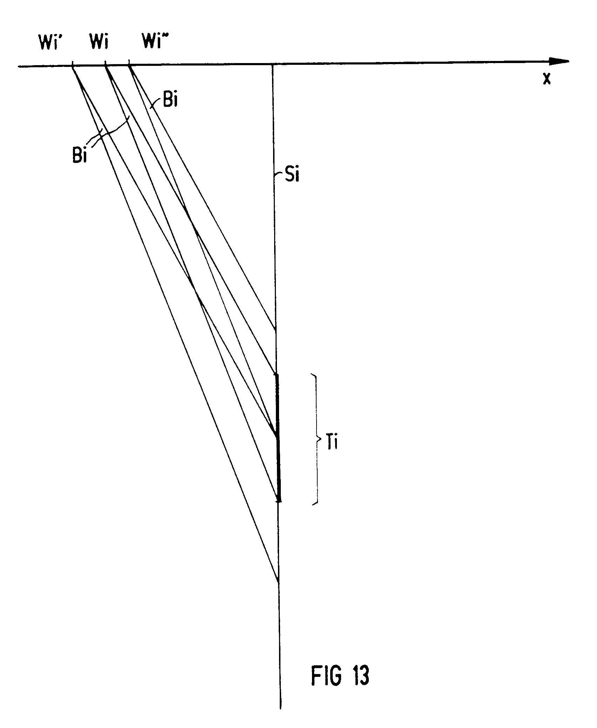

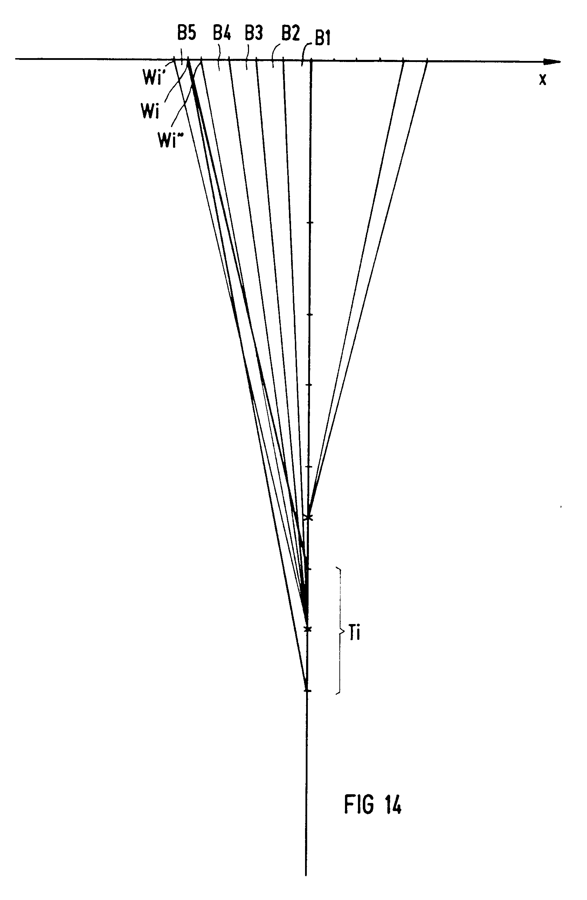

Pro Abtastzeile und Tiefenbereich fallen nun N-1 Korrelationen an, wenn N die Zahl der aktiven Elementarwandler der Apertur darstellt, die auf ihre Maximumsverschiebungen hin ausgewertet werden. Die Maximumsverschiebung ergibt den Abweichwert. Folgende Schritte sind nun durchzuführen:
1. Durch Aufaddition der Abweichwerte mit einem beliebig gewählten Anfangswert, z. B. Null für ein äußerstes Randelement, wird die Abweichwertekurve τ gebildet.
2. In die Abweichwertekurve wird eine Ausgleichsgerade AG gelegt nach der Methode der kleinsten Fehlerquadrate.
3. Die Abweichungen der Abweichwertekurve gegenüber dieser Ausgleichsgeraden wird ermittelt und als korrigierte Abweichwertekurve weiterverarbeitet.
4. Diese Kurve ist nach den Winkelbereichen B5 bis -B5 zu unterteilen.
   Die Bereichsgrenzen der Winkelbereiche können nach dem anhand von FIG 12 geschilderten Vorgehen gefunden werden, wenn die Problemstellung umgekehrt wird: nicht der Wandler ist gegeben und der Tiefenbereich gesucht, sondern der Tiefenbereich ist gegeben und der Wandler ist gesucht. Dies ist in FIG 13 am Beispiel dargestellt. Der Tiefenbereich Ti wird vom Wandler Wi im Winkelbereich Bi gut erfaßt. Die zugelassen Grenzlagen werden erreicht, wenn der Winkelbereich Bi so seitlich prallel verschoben wird, daß die Hälfte des betrachteten Tiefenbereichs Ti vom Winkelbereich Bi noch erfaßt wird. Dies markiert einen Bereich in der Apertur von dem Wandler Wi' bis zum Wandler Wi'', denen der Abweichwert aus dem Tiefenbereich Ti im Winkelbereich Bi zugeordnet werden darf. Das selbe Ergebnis findet man nach FIG 14, wenn der Winkelfächer der Winkelbereiche B1 bis B5 und von -B1 bis -B5 der Mitte des am weitesten von der Arrayoberfläche entfernten Tiefenbereiches Ti auf das Array rückprojiziert wird.
5. Aus dem zu jedem Winkelbereich gehörenden Teilstück der Abweichwertkurve werden die Gleichanteile entfernt.
6. Die so gebildeten Hilfskorrekturwerte werden den Wandlerorten zugeteilt und mit den bereits vorhandenen gespeicherten Werten gegebenenfalls gewichtet gemittelt.
   Dies geschieht für jeden Tiefenbereich und für alle Abtastzeilen. Es ergeben sich so 10 (oder 5) Kurven für die 10 (oder 5) für das ganze Array geltenden Winkelbereiche.
   Benachbarte Kurven müssen eine gewisse Ähnlichkeit aufweisen. Dies wird ausgenutzt um grobe Fehler zu erkennen in dem die Differenzen zwischen den Nachbarkurven auf Überschreitung eines oberen Grenzwerts überwacht werden.
7. Für eine bestimmte zu korrigierende Apertur und Fokussierungstiefe wird der der Apertur nächstliegende Tiefenbereich und die dazugehörige Aufteilung der Winkelbereiche gesucht, wie sie bei der Winkelbereichszuteilung verwendet wurde.
8. Mit dieser Aufteilung schneidet man die benötigten Bereiche aus den 10 (5) Hilfskorrekturwertekurven aus, wie in FIG 11 erläutert.
9. Die den Winkelbereichen zugeordneten Kurvenstücke der Hilfskorrekturwertekurve werden so verschoben, daß keine Sprünge an den Übergangsstellen auftreten. Die so ermittelten Korrekturwerte können nun in der auf der Adaptionsphase folgenden Bilddarstellungsphase die Verzögerungswerte, wie sie für homogene Geschwindigkeitsverteilungen gelten, korrigieren und somit die Qualität des Bildes verbessern.

Diese Korrekturwerte können anstatt in der Bilddarstellungsphase in der Adaptionsphase in einem nachfolgenden weiteren Sende- und Empfangszyklus zum Senden verwendet werden, wie in der EP-A 0 256 481 beschrieben. Dabei werden aus den Echosignalen des zweiten Sende- und Empfangszyklus modifizierte Korrekturwerte für die nachfolgende Bilddarstellungsphase gewonnen. Zusätzlich kann in der Bilddarstellungsphase zur Verbesserung der Bildqualität mit korrigierten Verzögerungswerten gesendet werden.

## Patentansprüche

1. Verfahren zur Ultraschall-Bilddarstellung einer Schnittebene eines Objektes mit einer oberflächennahen inhomogenen Geschwindigkeitsverteilung, bei dem
- in einer nicht zur Bilddarstellung vorgesehenen Adaptionsphase die Schnittebene zeilenweise (S1, S2,...) abgetastet wird,
- in der Adaptionsphase aus den von den Elementarwandlern in einer Apertur eines Wandlerarrays empfangenen Echosignalen entlang einer Abtastzeile (S1, S2,...) Abweichwerte der Signalverzögerung der Elementarwandler gegenüber den Signalverzögerungen ermittelt werden, die bei homogener Schallgeschwindigkeitsverteilung die Elementarwandler auf die Abtastzeile fokussieren würden,
- aus den Abweichwerten jeweils mehrerer Abtastzeilen Korrekturwerte zur Empfangsfokussierung entlang einer einzelnen Abtastzeile in einer Bilddarstellungsphase gebildet werden,
- in der auf der Adaptionsphase folgenden Bilddarstellungsphase der Schnittebene beim fokussierten Empfang die Verzögerungszeiten, mit denen die Echosignale von den Elementarwandlern verzögert werden, in Abhängigkeit der Korrekturwerte verändert werden, so daß Bildirritationen aufgrund der inhomogenen Geschwindigkeitsverteilung kompensiert werden,
**dadurch gekennzeichnet,** daß
- in der Adaptionsphase die Abweichwerte und die Korrekturwerte für die Verzögerungszeiten in Abhängigkeit vom Einfallswinkel (-B5 bis B5) der Echosignale auf die Elementarwandler gebildet werden und daß
- in der darauffolgenden Bilddarstellungsphase die Verzögerungswerte in Abhängigkeit des Einfallswinkels (-B5 bis B5) der Echosignale und in Abhängigkeit der Korrekturwerte für diesen Einfallswinkel geändert werden.

2. Verfahren zur Ultraschall-Bilddarstellung nach Anspruch 1, **dadurch gekennzeichnet,** daß die Abweichwerte und die Korrekturwerte für die Verzögerungszeiten für einen Einfallswinkelbereich (-B5 bis B5) gebildet werden, dessen Grenzen so festgelegt sind, daß die Phasenverschiebung der fokussierten Echosignale, die innerhalb des Einfallswinkelbereiches (-B5 bis B5) auf den Elementarwandler auftreffen, unterhalb einer Schwelle (1/10 T) bleibt.

3. Verfahren zur Ultraschall-Bilddarstellung nach Anspruch 2, **dadurch gekennzeichnet,** daß der Gesamteinfallswinkelbereich zwischen den beiden maximalen Einfallswinkeln (-αₘₐₓ bis αₘₐₓ) in für alle Wandlerelemente gültige gleichgroße Einfallswinkelbereiche (-B5 bis B5) eingeteilt ist.

4. Verfahren zur Ultraschall-Bilddarstellung nach Anspruch 2 oder 3, **dadurch gekennzeichnet,**
- daß zur Bestimmung der Abweichwerte in Abhängigkeit der Einfallswinkelbereiche (-B5 bis B5) und des Abstandes der Elementarwandler von der Abtastzeile (S1, S2,...) auf der Abtastzeile Tiefenbereiche (T1 bis T7) festgelegt sind,
- daß für jeden Tiefenbereich (T1 bis T7) aus den jeweils von dort stammenden Echosignalen nach einer Verzögerung mit Werten, die bei homogener Schallgeschwindigkeitsverteilung eine Fokussierung auf die Abtastzeile (S1 bis S2,...) bewirken würde, in Abhängigkeit der Einfallswinkelbereiche die Kreuzkorrelationsfunktion der fokussierten Echosignale jeweils benachbarter Elementarwandler gebildet wird, wobei die Integrationsgrenzen für die Kreuzkorrelationsfunktion durch die Schnittpunkte des Einfallswinkelbereiches mit dem Tiefenbereich festgelegt sind, und
- daß die Verschiebung des Maximums der Kreuzkorrelationsfunktion auf der Zeitachse den Abweichwert für einen der benachbarten Elementarwandler ergibt.

5. Verfahren zur Ultraschall-Bilddarstellung nach Anspruch 4, **dadurch gekennzeichnet,** daß die Abtastzeile (S1, S2,...) in für alle Elementarwandler und für alle Abtastzeilen gültige, aneinandergrenzende Tiefenbereiche (T1 bis T7) eingeteilt ist, deren Grenzen in Abhänigkeit des am weitesten von der Senkrechten (6) abweichenden Einfallswinkelbereiches (B5, -B5) wie folgt bestimmt werden:
- die Schnittpunkte (z8, z9) der Abtastzeile (S1,...) mit dem von der Senkrechten (6) am weitesten abweichenden Winkelbereich (B5, -B5) des Elementarwandlers (W', W'') am Rand der größten Apertur (A) bestimmen den am weitesten vom Wandlerarray entfernten Tiefenbereich (T7);
- die anschließenden, näher am Wandlerarrays liegenden Tiefenbereiche (T6, T5,..) werden jeweils aus dem vorangehenden Tiefenbereich (T7, T6,...) festgelegt durch die Bestimmung eines näher an der Abtastzeile (S1, S2,...) liegenden Elementarwandlers, dessen am weitesten von der Senkrechten abweichender Einfallswinkelbereich (B5, -B5) die Abtastzeile (S1) so schneidet, daß sich der näher am Wandlerarray befindende Tiefenbereich (T6, T5,...) an die vorangehenden Tiefenbereiche (T7, T6,...) anschließt.

6. Verfahren zur Ultraschall-Bilddarstellung nach Anspruch 5, **dadurch gekennzeichnet,** daß die für einen Tiefenbereich (T1 bis T7) und den dazu gehörigen Einfallswinkelbereich (-B5 bis B5) gebildete Kreuzkorrelationsfunktion in einer Umgebung des tiefenbereichsbestimmenden Elementarwandlers (Wi) für denselben Einfallswinkelbereich (-B5 bis B5) gebildet wird, wobei die Umgebung durch die Elementarwandler (Wi', Wi'') begrenzt ist, deren Einfallswinkelbereich (-B5 bis B5) den Tiefenbereich (T1 bis T7) bis zu einer vorgegebenen Grenze erfaßt.

7. Verfahren zur Ultraschall-Bilddarstellung nach Anspruch 6, **dadurch gekennzeichnet,** daß die Kreuzkorrelationsfunktion für einen Einfallswinkelbereich (-B5 bis B5) für die benachbarten Elementarwandler gebildet wird, deren durch den Tiefenbereich festgelegter Einfallswinkelbereich mindestens die Hälfte des Tiefenbereiches (T1 bis T7) erfaßt.

8. Verfahren zur Ultraschall-Bilddarstellung nach einem der Ansprüche 3 bis 7**, dadurch gekennzeichnet,** daß die Abweichwerte über die Elementarwandler des Arrays für jeden Tiefenbereich (T1 bis T7) und für jede Abtastzeile (S1, S2,..) getrennt zu einer Abweichwertekurve (τ) aufintegriert werden, wobei die einzelnen Teile der Abweichwertkurve (**τ**) jeweils für einen anderen Einfallswinkelbereich (-B5 bis B5) gelten.

9. Verfahren zur Ultraschall-Bilddarstellung nach Anspruch 8, **dadurch gekennzeichnet,** daß in jede Abweichwertekurve (**τ**) eine Ausgleichsgerade (AG) nach der Methode der kleinsten Fehlerquadrate gelegt wird und daß die Differenzwerte zwischen der Abweichwertekurve und der Ausgleichsgerade (AG) als korrigierte Abweichwertekurve (**τ**') der weiteren Signalverarbeitung zugrundegelegt ist.

10. Verfahren zur Ultraschall-Bilddarstellung nach Anspruch 9, **dadurch gekennzeichnet,** daß für jeden Elementarwandler alle korrigierten Abweichwertekurven (**τ'**) für gleiche Winkelbereiche (T1 bis T7), aber unterschiedliche Abtastzeilen (S1, S2,...) und Tiefenbereiche (T1 bis T7) miteinander gemittelt werden, so daß über die Elementarwandler für jeden Winkelbereich (-B5 bis B5) eine Hilfskorrekturwertekurve gebildet ist.

11. Verfahren zur Ultraschall-Bilddarstellung nach Anspruch 10, **dadurch gekennzeichnet,** daß vor der Mittelung die korrigierte Abweichwertekurven aller Tiefenbereiche und Abtastzeilen dem Prozeß des "Aligning" unterworfen werden.

12. Verfahren zur Ultraschall-Bilddarstellung nach Anspruch 10, **dadurch gekennzeichnet,** daß vor der Mittelung die korrigierten Abweichwertekurven (**τ**') für jeden Einfallswinkelbereich (-B5 bis B5) getrennt von ihrem Gleichanteil befreit werden.

13. Verfahren zur Ultraschall-Bilddarstellung nach Anspruch 10, **dadurch gekennzeichnet,** daß für nahezu senkrecht auf das Wandlerarray auftreffende Echosignale die Kreuzkorrelationsfunktion über alle Tiefenbereiche (T1 bis T7) gebildet wird, die dann für den die Senkrechte (6) umfassenden Winkelbereich die Hilfskorrekturwerte darstellen.

14. Verfahren zur Ultraschall-Bilddarstellung nach Anspruch 12, **dadurch gekennzeichnet,** daß die vom Gleichanteil befreiten, korrigierten Abweichwerte vor der Mittelung nach der Höhe des Maximums der Korrelationsfunktion gewichtet werden.

15. Verfahren zur Ultraschall-Bilddarstellung nach einem der Ansprüche 10 bis 13, **dadurch gekennzeichnet,** daß die Korrekturwerte für die Elementarwandler einer Apertur (A, A') abschnittsweise, entsprechend dem Einfallswinkelbereich (-B5 bis B5), in dem die Echosignale auf die Elementarwandler auftreffen, den Hilfskorrekturwertekurven entnommen werden, wobei zu den Abschnitten der Hilfskorrekturwertekurven jeweils eine Konstante (K) addiert wird, so daß an den Stoßstellen der aus den Abschnitten der Hilfskorrekturwertekurve gebildeten Korrekturwertekurve für die Apertur (A, A') keine Sprünge auftreten.

16. Verfahren zur Ultraschall-Bilddarstellung nach Anspruch 15, **dadurch gekennzeichnet,** daß für die Aperturmitte die Korrekturwerte unverändert aus dem Abschnitt der entsprechenden Hilfskorreturwertekurve entnommen werden.

17. Verfahren zur Ultraschall-Bilddarstellung nach einem der Ansprüche 15 oder 16, **dadurch gekennzeichnet,** daß die Konstanten (K) so gewählt werden, daß die Randwerte angrenzender Abschnitte der Hilfskorrekturwerte gleich sind.

18. Verfahren zur Ultraschall-Bilddarstellung nach einem der Ansprüche 15 oder 16, **dadurch gekennzeichnet**, daß die Konstanten (K) so gewählt werden, daß mehrere überlappende randnahe Hilfskorrekturwerte angrenzender Abschnitte im Sinne des "Aligning" übereinstimmen.

19. Verfahren zur Ultraschall-Bilddarstellung nach einem der Ansprüche 1 bis 18, **dadurch gekennzeichnet,** daß die Apertur (A, A') in Abhängigkeit der Lage des Fokus auf der Abtastzeile (S1, S2,...) so gewählt ist, daß sich für alle Tiefenbereiche eine konstante Fokussierungszahl ergibt.

20. Verfahren zur Ultraschall-Bilddarstellung nach einem der Ansprüche 1 bis 19, **dadurch gekennzeichnet,** daß in der Adaptionsphase ein weiteres Mal die Schnittebene zeilenweise (S1, S2,...) abgetastet wird, wobei mit den Korrekturwerten zunächst die Verzögerungszeiten für eine Sendefokussierung geändert werden, und aus den daraufhin empfangenen Echosignalen modifizierte Korrekturwerte für die Bilddarstellungsphase gebildet werden.

## Claims

1. A method for ultrasound image representation of a sectional plane of an object with a non-uniform speed distribution near the surface, in which
- in an adaption phase not provided for representing images the sectional plane is scanned line by line (S1, S2, ...),
- in the adaption phase, deviation values of the signal delay of the elementary transducers relative to the signal delays which would focus the elementary transducers onto the scanning line when there is a uniform speed of sound distribution are determined from the echo signals received by the elementary transducers in an aperture of a transducer array,
- in an image representation phase, correction values for reception focussing along one individual scanning line are formed from the deviation values of several respective scanning lines,
- in the image representation phase of the sectional plane following the adaption phase, when there is focussed reception, the delay times with which the echo signals are delayed by the elementary transducers are altered in dependence on the correction values, so that image irritations due to non-uniform speed distribution are adjusted, characterised in that
- in the adaption phase the deviation values and the correction values for the delay times are formed in dependence on the angle of incidence (-B5 to B5) of the echo signals on the elementary transducers and in that
- in the image representation phase following this the delay values are altered in dependence on the angle of incidence (-B5 to B5) of the echo signals and in dependence on the correction values for this angle of incidence.

2. A method for ultrasound image representation according to claim 1, characterised in that the deviation values and the correction values are formed for the delay times for an angle of incidence range (-B5 to B5), the boundaries of which are determined such that the phase displacement of the focussed echo signals, which strike within the angle of incidence range (-B5 to B5) on the elementary transducer, remains below a threshold (1/10 T).

3. A method for ultrasound image representation according to claim 2, characterised in that the total angle of incidence range between the two maximum angles of incidence (-αₘₐₓ to αₘₐₓ) are divided into equally-sized angle of incidence ranges (-B5 to B5) which are valid for all transducer elements.

4. A method for ultrasound image representation according to claim 2 or 3, characterised in that
- depth ranges (T1 to T7) are fixed on the scanning line for determining the deviation values in dependence on the angle of incidence ranges (-B5 to B5) and the spacing of the elementary transducers from the spacing line (S1, S2, ...),
- in that for each depth range (T1 to T7), the cross-correlation function of the focussed echo signals of respective adjacent elementary transducers is formed, in dependence on the angle of incidence ranges, from the respective echo signals originating from that depth range, after a delay with values which would effect focussing on the scanning line (S1 to S2, ...) when there is a uniform speed of sound distribution, wherein the integration boundaries for the cross-correlation function are fixed by the points of intersection of the angle of incidence range with the depth range and
- in that the displacement of the maximum of the cross-correlation function on the time axis produces the deviation value for one of the adjacent elementary transducers.

5. A method for ultrasound image representation according to claim 4, characterised in that the scanning line (S1, S2, ...) is divided into depth ranges (T1 to T7) adjacent to one another and valid for all elementary transducers and for all scanning lines, the boundaries of which are determined in dependence on the angle of incidence range (B5, -B5) deviating the furthest from the perpendicular line (6) in the following manner:
- the points of intersection (z8, z9) of the scanning line (S1, ...) with the angular range (B5, - B5) of elementary transducer (W', W''), deviating the furthest from the perpendicular line (6), at the edge of the largest aperture (A), determine the depth range (T7) spaced the furthest from the transducer array;
- the adjacent depth ranges (T6, T5, ...) lying closer on the transducer array are in each case determined from the preceding depth range (T7, T6 ...), by determining an elementary transducer lying closer on the scanning line (S1, S2, ...), the angle of incidence range (B5, -B5) of which deviating the furthest from the perpendicular line intersects the scanning line (S1), such that the range of depth (T6, T5, ...) located closer on the transducer array is connected to the preceding depth ranges (T7, T6, ...).

6. A method for ultrasound image representation according to claim 5, characterised in that the cross-correlation function formed for one depth range (T1 to T7) and the angle of incidence range (-B5 to B5) belonging thereto is formed in the vicinity of the elementary transducer (Wi) determining the depth range for the same angle of incidence range (-B5 to B5), wherein the vicinity is determined by the elementary transducers (Wi', Wi''), the angle of incidence range (-B5 to B5) of which determines the depth range (T1 to T7) up to a predetermined boundary.

7. A method for ultrasound image representation according to claim 6, characterised in that the cross-correlation function for an angle of incidence range (-B5 to B5) is formed for the adjacent elementary transducers, the angle of incidence range of which, determined by the depth range, detects at least half the depth range (T1 to T7).

8. A method for ultrasound image representation according to one of claims 3 to 7, characterised in that the deviation values are integrated separately to form a deviation value curve (τ) by way of the elementary transducers of the array for each depth range (T1 to T7) and for each scanning line (S1, S2, ...), wherein the individual parts of the deviation value curve (τ) apply in each case for another angle of incidence range (-B5 to B5).

9. A method for ultrasound image representation according to claim 8, characterised in that a compensating straight line (AG) according to the method of the smallest error squares is laid in each deviation value curve (τ) and in that the difference values between the deviation value curve and the compensating straight line (AG) is, as corrected deviation value curve (τ'), the basis of further signal processing.

10. A method for ultrasound image representation according to claim 9, characterised in that for each elementary transducer all corrected deviation value curves (τ') for the same angular ranges (T1 to T7), but different scanning lines (S1, S2, ...) and depth ranges (T1 to T7) are averaged with one another such that an auxiliary correction value curve is formed by way of the elementary transducers for each angular range (-B5 to B5).

11. A method for ultrasound image representation according to claim 10, characterised in that before averaging, the corrected deviation value curves of all depth ranges and scanning lines are subjected to the process of aligning.

12. A method for ultrasound image representation according to claim 10, characterised in that before averaging, the corrected deviation value curves (τ') for each angle of incidence range (-B5 to B5) are released separately from their direct component.

13. A method for ultrasound image representation according to claim 10, characterised in that for echo signals striking almost perpendicularly on the transducer array, the cross-correlation function is formed by way of all depth ranges (T1 to T7), which then represent the auxiliary correction values for the angular range embracing the perpendicular line (6).

14. A method for ultrasound image representation according to claim 12, characterised in that the deviation values corrected and released from the direct component before averaging are weighted according to the height of the maximum of the correlation function.

15. A method for ultrasound image representation according to one of claims 10 to 13, characterised in that the correction values for the elementary transducers of one aperture (A, A') are taken from the auxiliary correction value curves line by line, corresponding to the angle of incidence range (-B5 to B5), in which the echo signals strike the elementary transducers, wherein a constant (K) is added in each case to the sections of the auxiliary correction value curves so that at the impact points of the correction value curve for the aperture (A, A'), formed from the sections of the auxiliary correction value curve, no step changes occur.

16. A method for ultrasound image representation according to claim 15, characterised in that for the aperture centre the correction values are taken unchanged from the section of the corresponding auxiliary correction value curve.

17. A method for ultrasound image representation according to one of claims 15 or 16, characterised in that the constants (K) are selected such that the edge values of adjacent sections of the auxiliary correction values are equal.

18. A method for ultrasound image representation according to one of claims 15 or 16, characterised in that the constants (K) are selected such that several overlapping auxiliary correction values, close to the edge, of adjacent sections agree in the sense of aligning.

19. A method for ultrasound image representation according to one of claims 1 to 18, characterised in that the aperture (A, A') is selected in dependence on the position of the focus on the scanning line (S1, S2, ...) such that a constant focussing number is produced for all depth ranges.

20. A method for ultrasound image representation according to one of claims 1 to 19, characterised in that in the adaption phase the section plane is scanned again line by line (S1, S2, ...), wherein with the correction values the delay times for transmission focussing are altered first of all and from the echo signals received therefrom modified correction values are formed for the image representation phase.

## Revendications

1. Procédé d'imagerie par ultrasons d'un plan de coupe d'un objet possédant une distribution de vitesse hétérogène à proximité de la surface, selon lequel
- un balayage du plan de coupe est exécuté ligne par ligne (S1, S2, ...) pendant une phase d'adaptation non prévue pour la représentation d'une image,
- pendant la phase d'adaptation, à partir des signaux d'échos reçus des transducteurs élémentaires dans une ouverture du réseau de transducteurs, le long d'une ligne de balayage (S1, S2, ...) sont formées des valeurs d'écart du retard des signaux des transducteurs élémentaires par rapport aux retards des signaux, qui, dans le cas d'une distribution homogène de vitesse acoustique, focaliseraient les transducteurs élémentaires sur la ligne de balayage,
- à partir des écarts respectivement de plusieurs lignes de balayage sont formées des valeurs de correction servant à réaliser la focalisation de réception le long d'une ligne individuelle de balayage dans une phase de représentation de l'image,
- pendant la phase de représentation de l'image, qui suit la phase d'adaptation, du plan de coupe lors de la réception avec focalisation, les retards, avec lesquels les signaux d'échos délivrés par les transducteurs élémentaires sont retardés, sont modifiés en fonction des valeurs de correction de sorte que des déformations de l'image dues à la distribution hétérogène de vitesse sont compensées,
caractérisé par le fait que
- pendant la phase d'adaptation, les valeurs d'écart et les valeurs de correction pour les retards sont formés en fonction de l'angle d'incidence (-B5 à B5) des signaux d'échos sur les transducteurs élémentaires, et que
- pendant la phase suivante de représentation de l'image, les retards sont modifiés en fonction de l'angle d'incidence (-B5 à B5) des signaux d'échos et en fonction des valeurs de correction pour ces angles d'incidence.

2. Procédé d'imagerie par ultrasons suivant la revendication 1, caractérisé par le fait que les valeurs de correction pour les retards sont formées pour une gamme d'angles d'incidence (-B5 à B5), dont les limites sont fixées de telle sorte que le déphasage des signaux d'échos focalisés, qui rencontrent le transducteur élémentaire à l'intérieur de la gamme d'angles d'incidence (-B5 à B5), reste inférieur à un seuil (1/10 T).

3. Procédé d'imagerie par ultrasons suivant la revendication 2, caractérisé par le fait que la gamme totale d'angles d'incidence entre les deux angles d'incidence maximum (-αₘₐₓ à αₘₐₓ) est subdivisée en des gammes d'angles d'incidence (-B5 à B5) qui sont égales et valables pour tous les éléments transducteurs.

4. Procédé d'imagerie par ultrasons suivant la revendication 2 ou 3, caractérisé par le fait
- que pour la détermination des valeurs d'écart en fonction des gammes d'angle d'incidence (-B5 à B5) et de la distance entre les transducteurs élémentaires et la ligne de balayage (S1, S2, ...), des gammes de profondeurs (T1 à T7) sont formées sur la ligne de balayage,
- que pour chaque gamme de profondeurs (T1 à T7), la fonction de corrélation croisée des signaux d'échos focalisés de transducteurs élémentaires respectivement voisins est formée à partir des signaux d'échos qui proviennent respectivement desdites gammes de profondeurs, après un retard, avec des valeurs qui provoqueraient, dans le cas d'une distribution homogène de la vitesse acoustique, une focalisation sur la ligne de balayage (S1 à S2, ...), les limites d'intégration pour la fonction de corrélation croisée étant fixées par les points d'intersection de la gamme d'angles d'incidence avec la gamme de profondeurs, et
- que le décalage du maximum de la fonction de corrélation croisée sur l'axe des temps fournit la valeur d'écart pour l'un des transducteurs élémentaires voisins.

5. Procédé d'imagerie par ultrasons suivant la revendication 4, caractérisé par le fait que la ligne de balayage (S1, S2, ...) est subdivisée en des zones contiguës de profondeurs (T1 à T7), qui sont valables pour tous les transducteurs élémentaires et pour toutes les lignes de balayage et dont les limites sont déterminées comme indiqué ci-après en fonction de la gamme d'angles d'incidence (B5, -B5), qui s'écarte au maximum de la verticale (6) :
- les points d'intersection (z8, z9) de la ligne de balayage (S1, ...) avec la gamme d'angles (B5, -B5), qui s'écarte au maximum de la verticale (6), du transducteur élémentaire (W', W'') au niveau du bord de l'ouverture maximale (A), déterminent la gamme de profondeurs (T7) qui est la plus éloignée du réseau de transducteurs;
- les gammes de profondeurs (T6, T5, ...) de profondeurs adjacentes, qui sont plus proches du réseau de transducteurs sont fixées, respectivement à partir de la gamme précédente de profondeurs (T7, T6, ...), au moyen de la détermination d'un transducteur élémentaire, qui est plus proche de la ligne de balayage (S1, S2, ...) et dont la gamme d'angles d'incidence (B5, -B5), qui s'écarte le plus de la verticale, recoupe la ligne de balayage (S1) de telle sorte que la gamme de profondeurs (T6, T5, ...), qui est la plus proche du réseau de transducteurs, se raccorde aux gammes précédentes de profondeurs (T7, T6, ...).

6. Procédé d'imagerie par ultrasons suivant la revendication 5, caractérisé par le fait que la fonction de corrélation croisée formée pour une gamme de profondeurs (T1 à T7) et pour la gamme d'angles d'incidence (B5 à -B5), qui est associée à cette gamme de profondeur, est formée dans un environnement du transducteur élémentaire (Wi), qui détermine la gamme de profondeurs, pour la même gamme d'angles d'incidence (-B5 à B5), l'environnement étant limité par les transducteurs élémentaires (Wi', Wi''), dont la gamme d'angles d'incidence (-B5 à B5) détermine la gamme de profondeurs (T1 à T7) jusqu'à une limite prédéterminée.

7. Procédé d'imagerie par ultrasons suivant la revendication 6, caractérisé par le fait que la fonction de corrélation croisée est formée pour une gamme d'angles d'incidence (-B5 à B5) pour les éléments transducteurs voisins, dont la gamme d'angles d'incidence, qui est fixée par la gamme de profondeurs, englobe au moins la moitié de la gamme de profondeurs (T1 à T7).

8. Procédé d'imagerie par ultrasons suivant l'une des revendications 3 à 7, caractérisé par le fait que les transducteurs d'écarts pour les valeurs élémentaires du réseau sont intégrés séparément pour chaque gamme de profondeurs (T1 à T7) et pour chaque ligne de balayage (S1, S2, ...), pour former une courbe de valeurs d'écart (τ), les différentes parties de la courbe de valeurs d'écart (τ) étant valable respectivement pour une autre gamme d'angles d'incidence (-B5 à B5).

9. Procédé d'imagerie par ultrasons suivant la revendication 8, caractérisé par le fait que pour chaque courbe de valeurs d'écarts (τ), on détermine une droite d'alignement (AG) selon la méthode des moindres carrés et que pour la poursuite du traitement des signaux on prend pour base les différences entre la courbe de valeurs d'écart et la droite d'alignement (AG) en tant que courbe corrigée de valeurs d'écart (τ').

10. Procédé d'imagerie par ultrasons suivant la revendication 9, caractérisé par le fait que pour chaque transducteur élémentaire, la moyenne de toutes les courbes corrigées de valeurs d'écart (τ') est formée pour une plage angulaire identique (T1 à T7), mais pour des lignes de balayage différentes (S1, S2, ...) et des gammes différentes de profondeurs (T1 à T7), de sorte qu'une courbe de valeurs de correction auxiliaires est formée pour les transducteurs élémentaires pour chaque gamme d'angles (-B5 à B5).

11. Procédé d'imagerie par ultrasons suivant la revendication 10, caractérisé par le fait qu'avant la formation de la moyenne, on soumet les courbes corrigées de valeurs d'écart de toutes les gammes de profondeurs et de toutes les lignes de balayage au processus de "aligning".

12. Procédé d'imagerie par ultrasons suivant la revendication 10, caractérisé par le fait qu'avant la formation de la moyenne, on élimine séparément la composante continue des courbes corrigées de valeurs d'écart (τ') pour chaque gamme d'angles d'incidence (-B5 à B5).

13. Procédé d'imagerie par ultrasons suivant la revendication 10, caractérisé par le fait que pour des signaux d'échos apparaissant presque perpendiculairement au réseau de transducteurs, la fonction de corrélation croisée est formée sur toutes les gammes de profondeurs (T1 à T7), qui représentent alors les valeurs de correction auxiliaires pour la gamme d'angles englobant la verticale (6).

14. Procédé d'imagerie par ultrasons suivant la revendication 12, caractérisé par le fait que les valeurs d'écarts corrigées, dépourvues de leurs composantes continues, sont pondérées avant la formation de la moyenne, en fonction de la hauteur du maximum de la fonction de corrélation.

15. Procédé d'imagerie par ultrasons suivant l'une des revendications 10 à 13, caractérisé par le fait que les valeurs de correction pour les transducteurs élémentaires d'une ouverture (a, a') sont prélevées des courbes de valeurs de correction auxiliaires, par sections, en fonction de la gamme d'angles d'incidence (-B5 à B5) dans laquelle les signaux d'échos arrivent aux transducteurs élémentaires, une constante (K) étant respectivement ajoutée aux sections des courbes de valeurs de correction auxiliaires de sorte qu'aucun saut n'apparaît au niveau des points de raccordement des valeurs de correction, formées à partir des sections de la courbe de valeurs de correction auxiliaires, pour l'ouverture (A, A').

16. Procédé d'imagerie par ultrasons suivant la revendication 15, caractérisé par le fait que pour le centre de l'ouverture, les valeurs de correction sont prélevées sans modification à partir de la section de la courbe correspondante des valeurs de correction auxiliaires.

17. Procédé d'imagerie par ultrasons suivant l'une des revendications 15 ou 16, caractérisé par le fait que les constantes (K) sont choisies de telle sorte que les valeurs marginales de sections adjacentes de la courbe des valeurs de correction auxiliaires sont identiques.

18. Procédé d'imagerie par ultrasons suivant l'une des revendications 15 ou 16, caractérisé par le fait que les constantes (K) sont choisies de telle sorte que plusieurs valeurs de correction auxiliaires, qui sont proches des bords et se chevauchent, de sections adjacentes coïncident dans le sens de "l'aligning".

19. Procédé d'imagerie par ultrasons suivant l'une des revendications 1 à 18, caractérisé par le fait que l'ouverture (A, A') est choisie en fonction de la position du foyer sur la ligne de balayage (S1, S2, ...) de telle sorte qu'elle fournit, pour toutes les gammes de profondeurs, un nombre de focalisation constant.

20. Procédé d'imagerie par ultrasons suivant l'une des revendications 1 à 19, caractérisé par le fait que pendant la phase d'adaptation, le plan de coupe est balayé une nouvelle fois ligne par ligne (S1, S2, ...), auquel cas tout d'abord les retards pour une focalisation d'émission sont modifiés au moyen des valeurs de correction et les valeurs de correction modifiées sont formées, pour la phase de représentation de l'image, à partir des signaux d'échos qui sont alors reçus.
